# EUROPEAN PATENT APPLICATION

(11) **EP 2 887 512 A1**
(43) Date of publication of application: **24.06.2015**
(21) Application number: 13197977.5
(22) Date of filing: 18.12.2013
(51) Int. Cl.: H02K 11/00, H02K 7/18

(54) **Arrangement for reducing a bearing current**

(71) Applicant: Siemens Aktiengesellschaft, 80333 München (DE)
(72) Inventor: Noer, Bjarne, 8800 Viborg (DK)

(57) **Abstract**

The invention relates to an arrangement for reducing an electric current flowing between a rotor (11) and a stator (20) of an electrical machine via a bearing (50). In other words, the invention relates to a reduction of a bearing current of an electrical machine. A slot wedge (26) is located in the stator slot such that a coil (25), which encompasses one of the stator teeth, is prevented to slip out of the stator slot. The arrangement comprises at least one stator slot capacitance reducer (30) for reducing the capacitive voltage between the stator (20) and the rotor (11), thus reducing the electric current between the stator (20) and the rotor (11). Furthermore, the invention relates to a method of reducing the bearing current of an electrical machine.

## Description

### FIELD OF THE INVENTION

The present invention relates to an arrangement for reducing an electric current flowing between a rotor and a stator of an electrical machine. More specifically, the electric current flows via a bearing, and is thus also denoted as a bearing current. Furthermore, the invention relates to a method to reduce the bearing current.

### BACKGROUND OF THE INVENTION

An electrical machine, such as an electric motor or an electric generator, typically comprises two parts which move relative to each other under operation of the electrical machine. This movement may for instance be a linear movement, an oscillating movement or a rotating movement. In the case of a rotating movement, one part is typically denoted as a rotor while the other part is typically denoted as a stator. The rotor and the stator are advantageously connected via a bearing, such as e.g. a roller bearing, a tapered bearing, a hydrostatic bearing or a hydrodynamic bearing. In other words, a bearing may be characterized as the part of the electrical machine which connects the rotor with the stator. Typically, it cannot completely be avoided that an electric current flows via the bearing. However, usually the bearing is primarily not designed to carry or support an electric current.

Thus, the electrical machine may be damaged by bearing currents. Excessive levels of bearing currents and/or continuous levels of bearing currents may thus lead to a bearing failure and to a decreased life span of the electrical machine.

In the state of the art, the bearing may thus be insulated in order to reduce the bearing current. The bearing insulation may for instance comprise a coating with varnish or a wrapping with insulating tape. Either the rotor or the stator or both may be insulated. The bearing itself or the bearing and parts of other components of the electrical machine may be insulated. However, the bearing insulation may degrade, for instance by wear or by pollution and thus the bearing current will increase again.

Thus, there exists an urgent need to provide an improved way to reduce the electric current flowing between a rotor and a stator of an electrical machine via a bearing.

### SUMMARY OF THE INVENTION

This objective is achieved by the independent claims. The dependent claims describe advantageous developments and modifications of the invention.

In accordance with the invention there is provided an arrangement for reducing an electric current flowing between a rotor and a stator of an electrical machine via a bearing. The bearing connects the rotor with the stator, wherein the rotor is arranged and prepared to rotate about an axis of rotation with regard to the stator. The stator comprises a plurality of stator teeth comprising a first tooth and at least a second tooth. The first tooth and the second tooth are separated by a stator slot, which is arranged and prepared to accommodate a coil. Furthermore, a slot wedge is located in the stator slot such that the coil is prevented to slip out of the stator slot. The arrangement comprises at least one stator slot capacitance reducer for reducing the capacitive voltage between the stator and the rotor, thus reducing the electric current between the stator and the rotor. The stator slot capacitance reducer is located between the first tooth and the second tooth, and the stator slot capacitance reducer is connected with the slot wedge.

A bearing in general encompasses at least two parts which are moving relatively to each other. Typically, friction between the moving parts of a bearing occurs. There exists a whole range of bearing types, such as plane bearings, rolling element bearings, fluid bearings, magnetic bearings, jewel bearings or flexure bearings.

A plane bearing comprises a linear bearing providing a linear motion, a journal bearing, which is e.g. simply a shaft rotating in a bearing, or a thrust bearing providing a bearing surface for forces acting axial to a shaft.

A rolling element bearing comprises balls or rollers which aim reducing friction between the first bearing component and the second bearing component. Rolling elements that are used in rolling element bearings may be cylindrical rollers, tapered rollers, spherical rollers or needles.

A tapered roller bearing has particularly the advantage that it can take large axial forces as well as being able to sustain large radial forces. This is for instance very beneficial for the use of the bearing as a main bearing in a wind turbine.

Another alternative is a fluid bearing. A fluid bearing supports the bearings nodes solely on a layer of liquid or gas, in particular a thin layer of liquid or gas with a layer thickness below 1 mm (millimeter). Hydrostatic bearings are externally pressurized fluid bearings, where a fluid, e.g. oil, water or air, is pressurized by a pump. Hydrodynamic bearings rely on a high speed of a journal, a journal being a part of a shaft resting on the fluid, to pressurize the fluid in a wedge between the contact faces of the bearing components.

The rotor and/or the stator may comprise the shape of a hollow cylinder. If the rotor is arranged more inward or closer to the axis of rotation compared to the stator, the rotor is also denoted as an internal rotor. If, on the other hand, the rotor is located more outwards or further away of the axis of rotation compared to the stator, the rotor may be described as an external rotor. The stator comprises a plurality of stator teeth, wherein a coil, such as a prefabricated coil or a coil which is wound in situ, may advantageously be positioned or placed around a stator tooth.

When the coil is placed around the stator tooth, there may arise the risk or possibility that the coil slips out of the stator slot, depending on its position relative to the stator.

One finding upon which the invention is based on is the fact that the bearing current may be reduced by reducing the capacitance between the rotor and the stator. In particular, the capacitive voltage between the stator and the rotor may be reduced. The reduction of the capacitive voltage may be achieved by inserting a material into the gap between the rotor and the stator. The gap between the rotor and the stator comprises the region between tips of the stator teeth and the rotor outer surfaces. Furthermore, the gap comprises the distance between the outer surface of the slot wedge and the outer surface of the rotor.

The gap may for example be filled with air. Thus, the gap is also referred to as the air gap of the electrical machine. In the present invention, the capacitance reducing material which forms the stator slot capacitance reducer is placed between the first tooth and the second tooth and is attached or connected with the slot wedge. The stator slot capacitance reducer may comprise any material which is suited to reduce the capacitive voltage between the rotor and the stator.

In an advantageous embodiment, the stator slot capacitance reducer comprises metal, in particular steel.

Regarding the preferred choice of material for the slot wedge, it has to be kept in mind that by using a high content of metal for the slot wedge, there is a considerable risk of a short circuit between two adjacent tooth tips. Thus, in an advantageous embodiment, the slot wedge has an electrical resistivity which exceeds 0.1 Ohm meter at a temperature of 300 K. In other words, the slot wedge comprises a material which is non-conductive. Additionally, a material which is nonmagnetic may as well be advantageous.

Advantageously, the described stator slot capacitance reducer is applied or used in an electric generator for generating electricity out of a mechanical movement, in particular a rotational movement.

Furthermore, it is advantageous that the electrical machine, in particular the generator, is a part of a wind turbine.

A wind turbine is a device which converts energy from wind, which appears as kinetic energy, into electrical energy. This transformation from kinetic energy into electrical energy is advantageously performed by means of a generator.

It is particularly beneficial to reduce the bearing current by means of a stator slot capacitance reducer in a wind turbine, because repairing and maintaining the wind turbine may be complex and costly. This is in particular the case for offshore wind turbines. Thus, a reduced risk of failure of the bearing translates into a direct economical advantage.

In another advantageous embodiment, the slot wedge and the stator slot capacitance reducer are shaped such that the stator slot capacitance reducer can be clamped into the slot wedge. In order to achieve a clamping of the stator slot capacitance reducer into the slot wedge, both parts have to be designed such that they are able to mate with each other. For the case of the slot wedge, this may be achieved by appropriate notches or recesses. For the case of the stator slot capacitance reducer the dimension of the stator slot capacitance reducer has to be adapted. Clamping the stator slot capacitance reducer into the slot wedge may in particular be achieved by pressing the stator slot capacitance reducer in place by a roller. This procedure is also referred to as cleating.

In another advantageous embodiment, the arrangement comprises an electrical grounding between the stator slot capacitance reducer and the first tooth and/or between the stator slot capacitance reducer and the second tooth.

In other words, it is beneficial if the stator slot capacitance reducer is grounded with one of the adjacent teeth or both adjacent teeth. The electrical grounding may be achieved by a small strip which is placed perpendicular to the stator slot capacitance reducer. The strip for electrical grounding may comprise metal. Alternatively, it may comprise a different material which features a high electrical conductivity.

The invention is also directed towards a method to reduce an electric current flowing between a rotor and a stator of an electrical machine via a bearing. The method comprises inserting at least one stator slot capacitance reducer for reducing the capacitive voltage between the stator and the rotor into the stator, thus reducing the electric current between the stator and the rotor. In this context, the stator slot capacitance reducer is located in a stator slot between a first tooth and a second tooth of the stator, the stator slot capacitance reducer is connected to a slot wedge and the slot wedge is located in the stator slot such that a coil, which is located in the stator slot, is prevented to slip out of the stator slot.

In other words, the electric current flowing between the rotor and the stator via a bearing, which is also referred to as a bearing current, may be reduced by inserting the stator slot capacitance reducer into the stator. This may lead to a reduction of the electric current between the stator and the rotor which may lead to less failure of the bearing and thus to an increase of the life span of the electrical machine.

The insertion of the stator slot capacitance reducer into the stator, in particular into the slot wedge, may on the one hand be performed during manufacturing of the stator. On the other hand it may also be carried out after manufacturing the generator. It may, however, be advantageous to insert the stator slot capacitance reducer before assembling the generator, i.e. before the rotor is positioned closely adjacent to the stator. However, the insertion of the stator slot capacitance reducer may also be performed as a retrofit, i.e. it may also be inserted into a fully assembled generator.

In an advantageous embodiment, the method to reduce the bearing current comprises the following steps:
- placing the stator slot capacitance reducer onto the slot wedge, and
- clamping the stator slot capacitance reducer to the slot wedge, in particular by pressing the stator slot capacitance reducer in place by a roller.

The process of pressing the stator slot capacitance reducer in place by a roller is also referred to as cleating. An advantage of cleating is that it is a clean and purely mechanical process. An additional advantage is that cleating is a well-known technique. However, applying the process of cleating to the manufacturing of an improved electrical machine, and in particular to put a stator slot capacitance reducer in place is not known in the state of the art.

To achieve an even increased connection between the stator slot capacitance reducer and the slot wedge an adhesive, such as a glue, may also be put in place. In particular the adhesive is applied between the slot wedge and the stator slot capacitance reducer. An advantage of using an adhesive for this purpose is an improved connection between the stator slot capacitance reducer and the slot wedge. However, it has to be kept in mind that for high temperatures or further extreme conditions where the electrical machine is exposed to, the effect of the adhesive may also diminish or even be a nuisance to the electrical machine. Thus, using an adhesive in connection with clamping has to be considered under the application field or operating range of the finished electrical machine.

### BRIEF DESCRIPTION OF THE DRAWINGS

Embodiments of the invention are now described, by way of example only, with reference to the accompanying drawings, of which:
- Figure 1: shows a hub of a wind turbine which is arranged and prepared to be connected to a bearing;
- Figure 2: shows a cross section of a generator featuring a rotor and a stator;
- Figure 3: shows a perspective view of a stator slot capacitance reducer, which is placed into a stator slot;
- Figure 4: shows how a roller clamps a stator slot capacitance reducer to the slot wedge; and
- Figure 5: shows the clamped stator slot capacitance reducer.

The illustration in the drawings is schematically. It should furthermore be denoted that numerals which refer to similar features or elements are referred to with the same numeral throughout the drawings.

### DESCRIPTION OF THE DRAWINGS

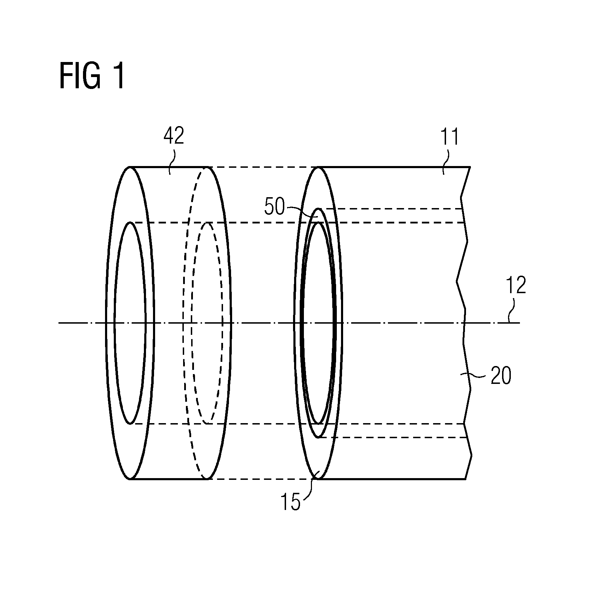

In Figure 1, a rotor 11 and a stator 20, which are connected with each other via a bearing 50 is shown. Both the rotor 11 and the stator 20 have a shape of a hollow cylinder. In other words, their respective shape can be described as annular. The rotor 11 is arranged rotatable with regard to the stator 20. Rotation can be performed about an axis of rotation 12. The rotor 11 comprises a rotor front face 15. By means of a plurality of flanges (not shown in Figure 1), a hub 42 of a wind turbine may be attached to the rotor 11.

During operation of the wind turbine, electricity is generated. This is done by rotating the rotor 11 about the axis of rotation 12 and by converting the rotational movement of the rotor 11 into electrical energy. During operation of the generator, i.e. of the wind turbine, a flow of an electric current from the rotor 11 to the stator 20 and vice versa cannot completely suppressed. This so-called bearing current, however, potentially damages the bearing 50. This may lead to a failure of the bearing 50, thus leading to a failure, e.g. a standstill, of the wind turbine. This may be costly and complicated to put in order again.

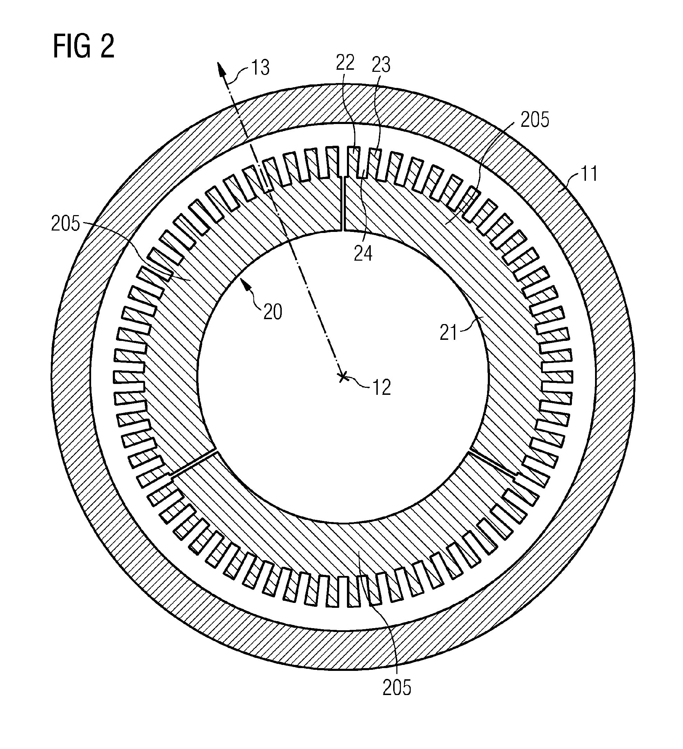

Figure 2 shows a closer look of the rotor 11 and the stator 20. In Figure 2, a cross sectional view perpendicular to the axis of rotation 12 is depicted. A radial direction 13 is defined by a line extending straightly away from the axis of rotation 12 in the cross sectional plane. Figure 2 shows an external rotor, as the rotor 11 is more distant from the axis of rotation 12 compared to the stator 20. The stator 20 comprises three stator units 205. Each stator unit 205 comprises a stator core 21 and a plurality of teeth. Exemplarily, a first tooth 22 and a second tooth 23 are referenced in Figure 2. The first tooth 22 and the second tooth 23 are separated by a stator slot 24. The stator slot 24 is arranged and prepared to house or to accommodate a coil 25 (not shown in Figure 2). The coil 25 may be a prefabricated coil or a coil which is wound after placing the material into the stator slots. In other words, the coil is wound in situ.

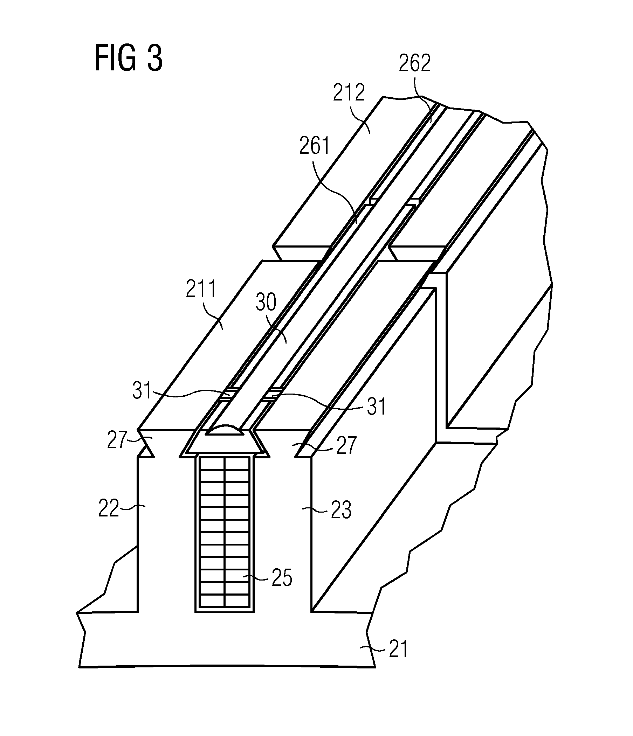

Figure 3 shows a detailed and perspective view of the first tooth 22 and the second tooth 23. Both teeth 22, 23 are connected by the stator core 21. Figure 3 shows a stator package which means that the stator core is laminated or subdivided into several segments. Figure 3 for example shows a first stator core segment 211 and a second stator core segment 212. Figure 3 also shows a coil which is placed into the stator slot 24. In a cross sectional view, i.e. in a cross sectional plane relative to the stator package, the coil 25 comprises four sides. At the first side the coil 25 is adjacent to the first tooth 22, at the second side it is adjacent to the second tooth 23, at the third side it is adjacent to the stator core 21 and at the fourth side, which is opposite to the third side, it is adjacent to a stator wedge 26. The stator wedge is designed such that once put in place it prevents the coil 25 of slipping out of the stator slot 24. This is achieved by a mating design between the stator wedge 26 and the teeth 22, 23. In particular this is achieved by the suited and appropriate shape of the tooth tips 27 of the first tooth 22 and the second tooth 23. In the exemplary embodiment of Figure 3, not only the stator core is segmented, but also the stator wedge 26. More specifically, the stator wedge 26 can be subdivided into a first stator wedge 261 and a second stator wedge 262. In order to achieve a better mechanical stability the length of the stator core segments 211, 212 and the stator wedge segments 261, 262 are different. In other words, the stator core segments 211, 212 and the stator wedge segments 261, 262 overlap.

Figure 3 furthermore shows a stator slot capacitance reducer 30. The stator slot capacitance reducer 30 comprises a shape of a strip with a major extension along the stator wedge 26 and the teeth 22, 23. The stator slot capacitance reducer 30 comprises a curved upper surface and a straight lower surface. The stator slot capacitance reducer 30 is furthermore connected with a stator slot capacitance reducer grounding unit 31. The stator slot capacitance reducer grounding unit 31 comprises two sub units, each of them connecting the stator slot capacitance reducer 30 with the first tooth 22 and the second tooth 23, respectively. The stator slot capacitance reducer grounding unit 31 is advantageously comprising a material with a good electrical conductivity, while the slot wedge 26 advantageously comprises a material with a low electrical conductivity.

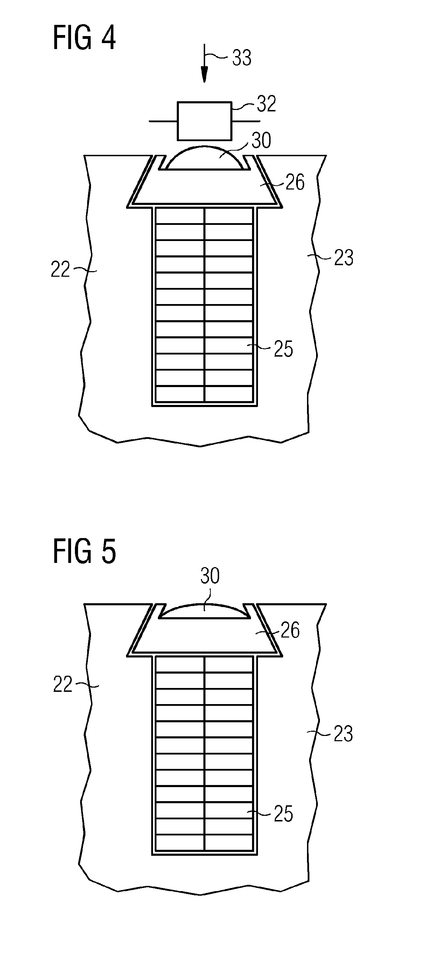

Figures 4 and 5 show two steps of clamping or cleating the stator slot capacitance reducer 30 to the slot wedge 26.

In Figure 4, the stator slot capacitance reducer 30 is already placed onto the slot wedge 26; however, it still comprises a relatively strongly curved upper surface. Its lateral extension within the cross sectional plane shown in Figure 4 is smaller as the recess which is corresponding and adhering to the stator wedge 26. It can be seen that a roller 32 is applied on the stator slot capacitance reducer 30. The direction in which the roller 32 is moved or pressed is referred to with numeral 33. By pressing the roller 32 onto the stator slot capacitance reducer 30, the stator slot capacitance reducer 30 changes its shape such that it becomes larger with regard to its lateral extension within the cross sectional plane and flatter. This effect can be seen in Figure 5.

Figure 5 shows a stator slot capacitance reducer 30 which has been clamped or cleated onto the slot wedge 26. Assuming that the deformation which has been induced by the roller 32 is inelastic, the stator slot capacitance reducer 30 is clamped or fixed into the slot wedge 26 such that it is prevented to slip out of its recess, i.e. of the recess of the slot wedge 26.

## Claims

1. Arrangement for reducing an electric current flowing between a rotor (11) and a stator (20) of an electrical machine via a bearing (50),
wherein
- the bearing (50) connects the rotor (11) with the stator (20), the rotor (11) being arranged and prepared to rotate about an axis of rotation (12) with regard to the stator (20),
- the stator (20) comprises a plurality of stator teeth comprising a first tooth (22) and at least a second tooth (23),
- the first tooth (22) and the second tooth (23) are separated by a stator slot (24),
- the stator slot (24) is arranged and prepared to accommodate a coil (25),
- a slot wedge (26) is located in the stator slot (24) such that the coil (25) is prevented to slip out of the stator slot (24),
**characterized in that**
- the arrangement comprises at least one stator slot capacitance reducer (30) for reducing the capacitive voltage between the stator (20) and the rotor (11), thus reducing the electric current between the stator (20) and the rotor (11),
- the stator slot capacitance reducer (30) is located between the first tooth (22) and the second tooth (23), and
- the stator slot capacitance reducer (30) is connected with the slot wedge (26).

2. Arrangement according to claim 1,
**characterized in that** the electrical machine is a generator.

3. Arrangement according to any one of the claims 1 or 2, **characterized in that** the slot wedge (26) and the stator slot capacitance reducer (30) are shaped such that the stator slot capacitance reducer (30) can be clamped into the slot wedge (26).

4. Arrangement according to any one of the claims 1 to 3, **characterized in that** the arrangement comprises an electrical grounding between the stator slot capacitance reducer (30) and the first tooth (22) and/or between the stator slot capacitance reducer (30) and the second tooth (23).

5. Arrangement according to any one of the claims 1 to 4, **characterized in that** the stator slot capacitance reducer (30) comprises metal, in particular steel.

6. Arrangement according to any one of the claims 1 to 5, **characterized in that** the slot wedge (26) has an electrical resistivity exceeding 0.1 Ohm * m at a temperature of 300 Kelvin.

7. Arrangement according to any one of the claims 1 to 6, **characterized in that** the electrical machine is a part of a wind turbine.

8. Method to reduce an electric current flowing between a rotor (11) and a stator (20) of an electrical machine via a bearing (50),
wherein the method comprises inserting at least one stator slot capacitance reducer (30) for reducing the capacitive voltage between the stator (20) and the rotor (11) into the stator (20), thus reducing the electric current between the stator (20) and the rotor (11), and
wherein
- the stator slot capacitance reducer (30) is located in a stator slot (24) between a first tooth (22) and a second tooth (23) of the stator (20),
- the stator slot capacitance reducer (30) is connected to a slot wedge (26),
- the slot wedge (26) is located in the stator slot (24) such that a coil (25), which is located in the stator slot (24), is prevented to slip out of the stator slot (24).

9. Method according to claim 8,
wherein the method comprises the following steps:
- placing the stator slot capacitance reducer (30) onto the slot wedge (26), and
- clamping the stator slot capacitance reducer (30) to the slot wedge (26), in particular by pressing the stator slot capacitance reducer (30) in place by a roller (32).
